# EUROPEAN PATENT SPECIFICATION

(11) **EP 3 845 905 B1**
(45) Date of publication and mention of the grant of the patent: **01.04.2026**
(21) Application number: 18931334.9
(22) Date of filing: 27.08.2018
(51) Int. Cl.: G01N 35/00, G01N 33/53, B08B 9/08, B03C 1/01, B03C 1/033, B03C 1/28, G01N 35/04, G01N 35/10

(54) **IMMUNOASSAY ANALYZER**
IMMUNOASSAY-ANALYSATOR
ANALYSEUR DE TEST IMMUNOLOGIQUE

(43) Date of publication of application: 07.07.2021
(73) Proprietor: Shenzhen Increcare Biotech Co. Ltd, Shenzhen, Guangdong 518055 (CN)
(72) Inventor: ZHANG, Zhen, Shenzhen, Guangdong 518055 (CN); HE, Taiyun, Shenzhen, Guangdong 518055 (CN)
(74) Representative: Novagraaf Group
(86) International application number: PCT/CN2018/102410
(87) International publication number: WO 2020/041920

(56) References cited:
- EP-A1- 2 618 157
- CN-A- 107 626 702
- CN-U- 203 432 982
- CN-U- 207 380 070
- JP-A- 2014 122 826
- US-A1- 2010 047 128
- US-A1- 2012 282 683

## Description

### FIELD OF THE INVENTION

The present disclosure relates to the technical field of *in vitro* diagnosis, and more particular, to an immunoassay analyzer.

### BACKGROUND OF THE INVENTION

Full-automatic immunoassay is based on immunological reactions in which antigens and antibodies bind to each other, uses enzymes, lanthanide, or chemical luminescence agents to label the antigens and the antibodies, associates optical or electrical signals with the concentration of an analyte through a series of cascade amplification reactions, and analyzes antigens or antibodies to be tested in human samples.

In measurement analysis, bound-free (B/F) of a substance to be tested is involved, that is, magnetic force is used to capture a compound (i.e., the substance to be tested) of bound magnetic particles, antigens, and labeled antibodies, and finally unbound free markers and other interfering impurities are removed.

The conventional immunoassay analyzer has a complicated structure and occupies a large area. At the same time, a rotary disk is used to drive a reaction container to rotate, so as to achieve "serial bound-free" of the substance to be tested in the reaction container. This may form residual contamination for the next reaction container in a process of sucking the waste liquid, thus affecting the analysis performance. Other immunoassay analyzers use multiple magnets at different positions to adsorb the substance to be tested, which results in a poor bound-free effect and affects the analysis performance.

EP 2 618 157 A1 describes a laboratory apparatus comprising at least one sample reception device, at least one sample reception section and a base, wherein the at least one sample reception device and, respectively, the at least one sample reception section is movable with respect to the base for performing a relative movement, while at least one magnetic tool device is stationary with respect to the base.

US 2012/282 683 A1 describes a sample analysis device provided with: a first sample processing portion which is disposed in a first layer and performs some of a plurality of processes on a sample in a container; a second sample processing portion which is disposed in a second layer located above or under the first layer and performs at least some other processes among the plurality of processes on the sample in the container, the some of the plurality of processes having been performed on the sample; and a container transfer portion which transfers the container, which contains the sample on which the some of the processes have been performed, from the first layer to the second layer.

US 2010/047 128 A1 describes a liquid aspirating apparatus comprising: a liquid aspirating nozzle; an aspirator for aspirating liquid through the liquid aspirating nozzle; a washing liquid discharging nozzle being arranged along a longitudinal direction of the liquid aspirating nozzle, wherein a discharge hole for discharging washing liquid is formed on the washing liquid discharging nozzle and the discharge hole faces a side surface of the liquid aspirating nozzle; and a washing liquid supplier for supplying the washing liquid to the side surface of the liquid aspirating nozzle through the discharge hole of the washing liquid discharging nozzle.

JP 2014 122 826 A describes An automatic analysis device including means for increasing the amount of a reaction liquid in a reaction vessel is provided before a reaction liquid discharge step in a magnetic separation process.

### SUMMARY OF THE INVENTION

The invention is defined by the features of the independent claim. Preferred embodiments are defined by the features of the dependent claims.

According to various embodiments of the present disclosure, an immunoassay analyzer that can improve the analysis performance is provided.

An immunoassay analyzer includes:
a sampling device including a sampling member configured to add a sample and a target reagent to a reactor;
an incubation device configured to incubate the reactor containing the sample and the target reagent;
a bound-free device having a first station and a second station, and including a liquid suction member, when at least one reactor reciprocates several times between the first station and the second station, waste liquid being in the same reactor is sucked by the same liquid suction member;
a measuring device configured to perform signal measurement to the reactor containing a signal reagent; and
a transfer device configured to transfer the reactors between the incubation device, the bound-free device, and the measuring device.

Details of one or more embodiments of the present disclosure are set forth in the following accompanying drawings and description. Other features, objectives and advantages of the present disclosure will become obvious from the description, drawings, and claims.

### BRIEF DESCRIPTION OF THE DRAWINGS

In order to better describe and illustrate embodiments and/or examples of those inventions disclosed here, one or more drawings may be referred to. Additional details or examples for describing the accompanying drawings shall not be deemed to limit the scope of any one of the disclosed inventions, embodiments and/or examples currently described, and the best mode of these inventions as currently understood.
FIG. 1 is a schematic planar view of an immunoassay analyzer according to an embodiment;
FIG. 2 is a schematic view showing a magnetic particle binder is suspended in a reactor;
FIG. 3 is a schematic view showing the magnetic particle binder is adsorbed on the reactor;
FIG. 4 is a schematic top view of a bearing block in FIG. 1;
FIG. 5 is a perspective view of a bound-free device in a first example in FIG. 1;
FIG. 6 is a perspective view of the bound-free device in a second example in FIG. 1;
FIG. 7 is a flowchart of a bound-free method according to an embodiment; and
FIG. 8 is a flowchart of a sample analysis method according to an embodiment.

### DETAILED DESCRIPTION OF THE INVENTION

To facilitate understanding of the present disclosure, a more comprehensive description of the present disclosure will be given below with reference to the relevant accompanying drawings. Preferred embodiments of the present disclosure are given in the drawings. However, the present disclosure may be implemented in many different forms and is not limited to the embodiments described herein. Rather, these embodiments are provided to make the contents disclosed in the present disclosure more fully understood.

It is to be noted that when one element is referred to as "fixed to" another element, it may be directly on another element or an intermediate element may exist. When one element is considered to be "connected to" another element, it may be directly connected to another element or an intermediate element may co-exist. The terms "inside", "outside", "left", "right" and similar expressions used herein are for illustrative purposes only and do not indicate unique embodiments.

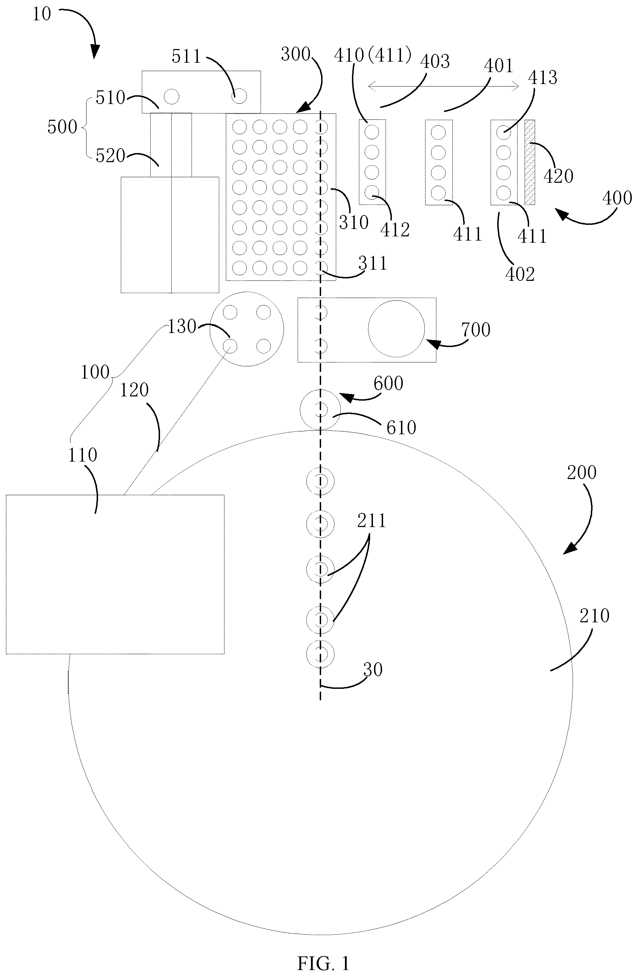

Referring to FIG. 1 to FIG. 4, an immunoassay analyzer 10 according to an embodiment of the present disclosure includes a supply device 100, a storage device 200, an incubation device 300, a bound-free device 400, a measuring device 500, a sampling device 600, a mixing device 700, and a transferring device. The supply device 100 sorts empty and clean reactors 20 to facilitate transferring and grasping. The storage device 200 stores a sample and a target reagent. The sampling device 600 adds the sample and the target reagent to the reactor 20. The mixing device 700 mixes the sample and the target reagent in the reactor 20. The incubation device 300 heats and incubates the reactor 20 containing the sample and the target reagent. The bound-free device 400 cleans the reactor 20 heated by the incubation device 300. The measuring device 500 tests the reactor 20 containing a signal reagent and a magnetic particle binder 21 that has been cleaned. The transferring device transfers the reactor 20 between the supply device 100, the incubation device 300, the bound-free device 400, and the measuring device 500. For example, the transferring device can transfer the reactor 20 on the supply device 100 to the incubation device 300, or transfer the reactor 20 on the incubation device 300 to the bound-free device 400, or transfer the reactor 20 on the bound-free device 400 to the measuring device 500.

In some embodiments, the supply device 100 includes a feed sorting mechanism 100, a supply slideway 120, and a supply disk 130. The feed sorting mechanism 100 may be located above the storage device 200, which can make full use of the space of the whole machine and make the whole machine more compact. The supply slideway 120 is connected between the feed sorting mechanism 100 and the supply disk 130. The feed sorting mechanism 100 includes a storeroom and a sorting unit. The storeroom is configured to store unused and clean reactors 20. The sorting unit sorts the orderless reactors 20 from the storeroom one by one. The supply slideway 120 transfers the sorted reactors 20 to the supply disk 130. The supply disk 130 is configured to buffer the sorted reactors 20. The reactors 20 may be distributed at intervals along a circumferential direction of the supply disk 130. The supply disk 130 is rotatable such that the transferring device can transfer the reactors 20 on the supply disk 130 into the incubation device 300 at a specified appropriate position.

In some embodiments, the storage device 200 includes a rotary disk 210. The rotary disk 210 is provided with a sampling position and a reagent position for placing a sample container and a reagent container and transferring the sample and the target reagent to sampling positions 211. The sample container is configured to contain a sample to be tested. The sample contains target detection substances to be tested, such as target antibodies and antigens. The reagent container is configured to contain the target reagent. A test item generally includes reagent components such as a magnetic particle reagent, an enzymatic reagent, and a diluent reagent. Various target reagents with different compositions can be separately contained in different reagent containers. The sampling positions 211 are arranged on the storage device 200, the sampling device sucks the sample from the sample container and sucks the target reagent from the reagent container through the storage device 200. The storage device 200 may further include a bar-code scanner. The bar-code scanner is configured to identify bar-code information on the sample container and the reagent container, so as to facilitate accurate sampling of the sampling device. In order to make the whole machine structure compact and reduce costs, the bar-code scanner adopts a fixed design. The storage device 200 may further include a refrigerator. In order to store the target reagent online for a long period of time, the refrigerator can refrigerate the reagent in the reagent container.

In some embodiments, the sampling device 600 includes a sampling member. The sampling member is configured to suck the sample and the target reagent. The sampling member includes a sampling steel needle. Of course, the sampling member may also include a disposable suction nozzle, or the like. The sampling member may have three degrees of freedom for linear motion in a three-dimensional space, that is, it can move up and down, left and right, and forward and backward. Of course, the sampling member may also have a degree of freedom for rotation. In order to improve the compactness of the whole machine and reduce the costs, the sampling steel needle can be configured to suck both the sample and the target reagent, that is, the sampling steel needle can not only suck the sample, but also can suck the target reagent. The sampling device 600 may further include a bound-free station 610. The bound-free station 610 is located on a side of the rotary disk 210 on the storage unit 200. The bound-free station 610 is located on a motion trajectory of the sampling member. The bound-free station 610 is configured to clean the sampling member. For example, when the sampling steel needle sucks the sample from the sample container, the sampling steel needle after sucking the sample may be cleaned in the bound-free station 610, and then the cleaned sampling steel needle can suck the target reagent from the reagent container. The bound-free station 610 can effectively prevent residual contamination during the suction of the sample and the target reagent.

In some embodiments, the incubation device 300 includes a temperature control unit and an incubation block 310. The incubation block 310 is fixedly arranged, which can omit a driving mechanism for driving the incubation block 310 to move, save a space occupied by the movement of the incubation block 310, and also improve the compactness of the whole machine and reduce the costs. The incubation block 310 may adapt aluminum or copper blocks with good thermal conductivity. The temperature control unit is configured to provide a constant temperature environment and reduce heat loss. The temperature control unit may include a heat insulation device, a heater, a temperature sensor, a temperature control circuit, and the like. The incubation block 310 has incubation positions 311 configured to contain the reactors 20. According to a requirement of an actual test speed, the number of the incubation position 311 may be 5 to 100, and all of the incubation positions 311 may be arranged in a matrix, that is, in the form of multi-row and multi-column arrangement.

In some embodiments, for the sampling positions 211 arranged on the storage device 200, the sampling positions 211 may be distributed on a straight line 30 located by a certain diameter of the storage device 200. Part of the incubation positions 311 on the incubation block 310 are on the straight line 30. The straight line 30 coincides with the motion trajectory of the sampling member. That is, the motion trajectory of the sampling member covers the sampling positions 211 and part of the incubation positions 311 on the incubation block 310. After the sampling member sucks the sample or the target reagent, the sampling member can move directly above the reactor 20 on the incubation block 310 with the shortest path and the least time, thus improving the dispensing efficiency of the sample and the target reagent in the reactor 20 on the incubation block 310.

In some embodiments, the mixing device 700 is located within a motion range of the transfer unit, or can move into the motion range of the transfer unit by horizontal motions. The mixing device 700 receives and bears the reactors 20 transferred by the transfer unit. The mixing device 700 is provided with at least one reactor position for placing reactors 20 that need to be mixed, and the mixing device 700 can mix the reactants in the reactors 20. The mixing device 700 mixes the reactors 20 after each dispensing of the sample and the target reagent by ultrasonic, bias rotation or oscillation. When an independent dispensing station is provided, the mixing device 700 and the dispensing station may be integrated together to form a dispensing and mixing device, which is more simple and compact in structure.

In some embodiments, the reactor positions on the mixing device 700 are below the motion trajectory of the sampling member, and the sampling member may dispense a sample and a target reagent in the reactor positions on the mixing device 700.

In addition to the above roles and functions, the mixing device 700 of the present embodiment can further receive the reactors 20 that need to be mixed after a signal reagent is dispensed. The transfer unit transfers the reactors 20 upon completion of bound-free and dispensing of the signal reagent to the mixing device 700. The mixing device 700 completes mixing of the reactors 20 to which the signal reagent is dispensed, which omits the configuration of a mixing unit on the bound-free device 400, further simplifies the structure and components, reduces the volume and costs, and also improves the reliability of the whole machine.

The reactor 20 containing the sample and the target reagent may be incubated in the incubation device 300 for approximately 5 to 60 minutes. Upon completion of the incubation, magnetic particles, substances to be tested, and labeled reagents in the reactor 20 react with each other and bind to form the magnetic particle binder 21. The labeled reagents not participating in the reaction do not bind to the magnetic particles and are free in a suspension of the reactor 20. The bound-free device 400 washes the magnetic particle binder 21 to remove free labeled reagents and other unreacted unbound components.

Referring to FIG. 1 to FIG. 6 together, in some embodiments, the bound-free device 400 has an initial station 403, a first station 401, and a second station 402. The bound-free device 400 includes a bracket 450, a bearing component 410, a magnetic adsorbing component 420, a liquid injection component 430, and a liquid suction component 440. The bearing component 410, the magnetic adsorbing component 420, the liquid injection component 430, and the liquid suction component 440 are all provided on the bracket 450. The bearing component 410 is configured to drive the reactor 20 to move between the initial station 403, the first station 401, and the second station 402. The magnetic adsorbing component 420 is configured to adsorb the magnetic particle binder 21 in the reactor 20 at the second station 402. The liquid injection component 430 includes a liquid injection member 431. The liquid injection member 431 is configured to inject cleaning liquid into the reactor 20 at the first station 401. The liquid suction component 440 includes liquid suction members 441 that are in one-to-one correspondence with the bound-free positions 412. The liquid suction members 441 are configured to suck waste liquid from the reactor 20 at the second station 402. The liquid injection member 431 may be a member suitable for liquid injection such as a liquid injection needle, a liquid injection pipe or a liquid injection nozzle. Similarly, the liquid suction members 441 may also be a member suitable for liquid suction such as a liquid suction needle, a liquid suction pipe or a liquid suction nozzle. In the present embodiment, the configuration of the first station 401 and the second station 402 can avoid the injection of cleaning liquid and the suction of waste liquid during bound-free at the same station, which not only is conducive to the heavy suspension of the magnetic particle binder 21 after the injection, but also can reduce the bound-free residue, thus improving the bound-free effect and the final analysis performance.

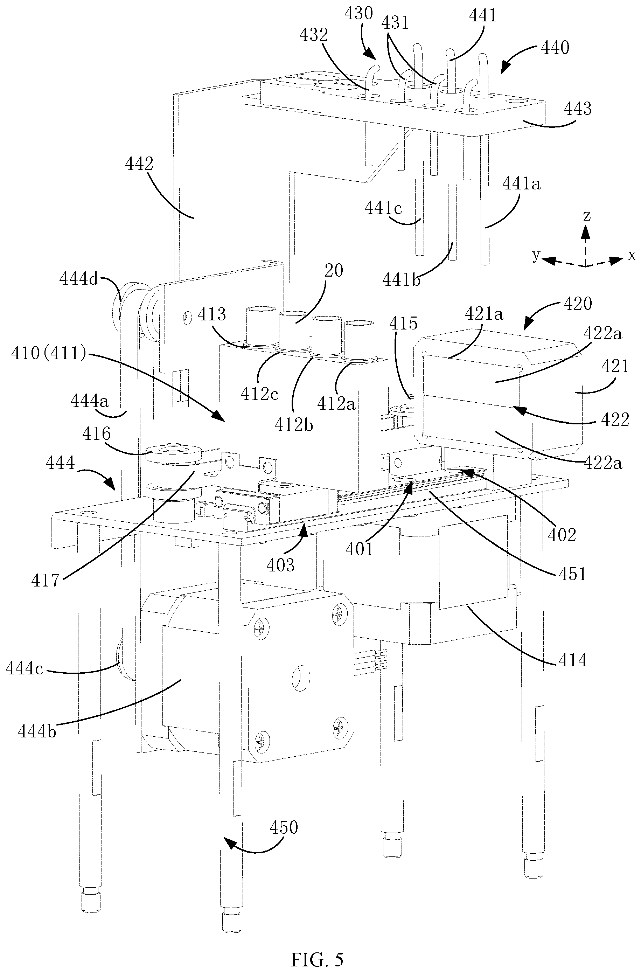

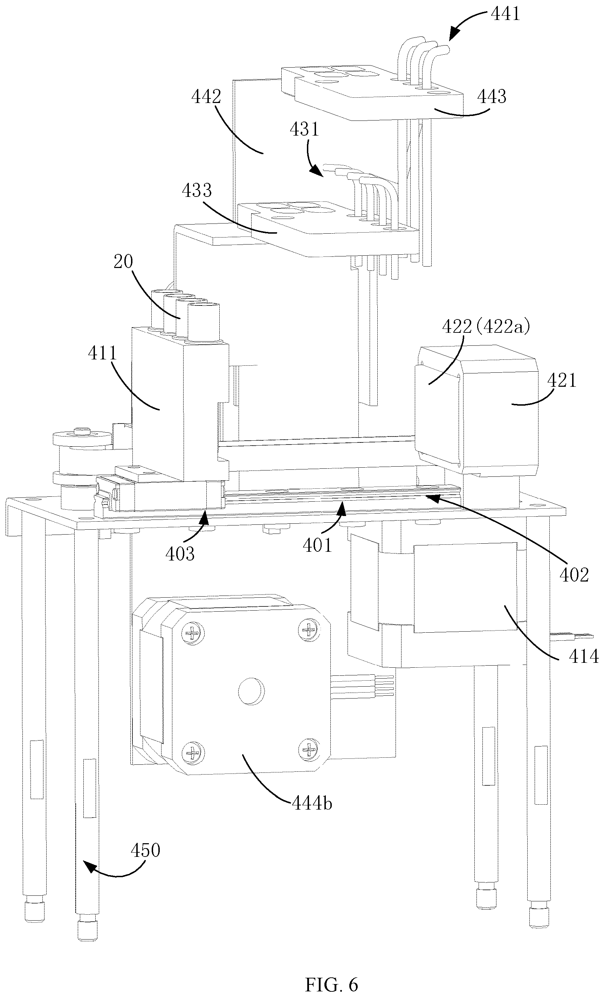

Referring to FIG. 5 and FIG. 6 together, the bearing component 410 is slidably arranged on the bracket 450, and is capable of sliding between the initial station 403, the first station 401, and the second station 402. The bearing component 410 is provided with at least one bound-free position 412, which is configured to place the reactors 20. In some embodiments, the bearing component 410 includes a bearing block 411, which is integrally formed. The bound-free positions 412 are accommodating holes on the bearing block 411. Of course, a plurality of bearing blocks 411 may be provided. Other clamping structures may also be adopted for the bound-free positions 412, as long as the reactors 20 can move with the bearing blocks 411. The bracket 450 may be provided with a sliding rail 451, which is a linear sliding rail 451. The bearing block 411 is in sliding fit with the sliding rail 451. Therefore, the motion trajectory of the bearing component 410 between the initial station 403, the first station 401, and the second station 402 is a straight line.

The bearing component 410 further includes a belt transmission unit mounted on the bracket 450 and configured to drive the bearing block 411 to move along the sliding rail 451. In some embodiments, the belt transmission unit includes a stepping motor 414, a driving wheel 415, a driven wheel 416, and a synchronous belt 417. The stepping motor 414 is fixed to the bracket 450. The driving wheel 415 is provided on an output shaft of the stepping motor 414. The driven wheel 416 is rotatably arranged on the bracket 450. The synchronous belt 417 is arranged, in a sleeving manner, between the driving wheel 415 and the driven wheel 416. The bearing block 411 is fixed to the synchronous belt 417. When the stepping motor 414 rotates, the synchronous belt 417 pulls the bearing block 411 to move along the sliding rail 451, so as to implement the movement of the bearing block 411 between the initial station 403, the first station 401, and the second station 402. Therefore, the motion trajectory of the bearing component 410 between the initial station 403, the first station 401 and the second station 402 is a straight line. In other embodiments, the belt transmission unit may also be replaced with a rack and pinion mechanism. The motion trajectory of the bearing component between the initial station 403, the first station 401, and the second station 402 may also be a circle, a triangle, etc.

In some embodiments, the bearing block 411 of the bearing component 410 may also be provided with a dispensing position 413. The structure of the dispensing position 413 is the same as that of the bound-free position 412. The dispensing position 413 is on a side of the bound-free position 412, and the dispensing position 413 is configured to place the magnetic particle binder 21 in the reactor 20 to which a signal reagent needs to be dispensed after the cleaning is completed. The liquid injection component 430 further includes an injection member 432. When the bearing component 410 is at the first station 401, the injection member 432 can inject the signal reagent to the reactor 20 located in the dispensing position 413. Therefore, in addition to the cleaning function, the bound-free device 400 may further has a function of dispensing the signal reagent to the reactor 20, so to achieve an effect of "one machine dual use", which reduces manufacturing costs on the basis of improving the compactness of the whole machine.

Referring to FIG. 5, in some embodiments, the accommodating holes (bound-free positions 412) on the bearing block 411 are arranged in a straight line (denoted as a first straight line), and an extension direction of the straight line is perpendicular to a sliding direction of the bearing block 411. Similarly, the liquid injection members 431 are arranged in a straight line (denoted as a second straight line), and the liquid injection members 431 are in one-to-one correspondence with the accommodating holes on the bearing block 411. The liquid suction members 441 are arranged in a straight line (denoted as a third straight line), and the liquid suction members 441 are in one-to-one correspondence with the accommodating holes on the bearing block 411. The first straight line, the second straight line, and the third straight line are parallel in space, that is, the straight lines located by the accommodating holes, the liquid injection members 431, and the liquid suction members 441 are parallel to each other.

Referring to FIG. 5, in some embodiments, the magnetic adsorbing component 420 includes a mounting frame 421 and at least one permanent magnet unit 422. The mounting frame 421 is provided with an accommodating cavity 421a. The permanent magnet units 422 are received in the accommodating cavity 421a. The mounting frame 421 provides support and protection for the permanent magnet units 422. When the bearing component 410 is at the second station 402, all of the permanent magnet units 422 have orthographic projections on the bearing block 411 of the bearing component 410. In a direction (Y-axis direction) perpendicular to the sliding direction (X-axis direction) of the bearing block 411, that is, in the arrangement direction of the bound-free positions 412, the orthographic projections of all of the permanent magnet units 422 cover all of the bound-free positions 412. When only one permanent magnet unit 422 is provided, an orthographic projection of the permanent magnet unit 422 on the bearing component 410 can cover all of the bound-free positions 412. When more than one permanent magnet unit 422 is provided, an orthographic projection of at least one permanent magnet unit 422 on the bearing component 410 can cover at least two bound-free positions 412. For example, in the direction perpendicular to the sliding direction of the bearing block 411, when both the permanent magnet unit 422 and the bearing block 411 are symmetrically arranged relative to the sliding rail 451, a length of the permanent magnet unit 422 is greater than or equal to that of all of the bound-free positions 412. This can ensure that the orthographic projection can cover all of the bound-free positions 412, and further ensure that a magnetic line of force of the permanent magnet unit 422 can cover the reactors 20 located at different bound-free positions 412, so as to form effective adsorption for the magnetic particle binders 21 in all the reactors 20. Meanwhile, the magnetic line of force of the permanent magnet unit 422 can be evenly distributed on various bound-free positions 412, which avoids placement of a plurality of magnets at a plurality of bound-free positions 412, prevents problems of uneven distribution of magnetic forces at different bound-free positions 412 and interaction of magnetic forces at adjacent bound-free positions 412, and further avoids differences between bound-free effects of the plurality of bound-free positions 412, improving the bound-free effect and analysis performance.

In some embodiments, injection of cleaning liquid and suction of waste liquid may be performed for the reactors 20 at the same station. That is, the reactors 20 do not need to reciprocate between the first station 401 and the second station 402. Meanwhile, the waste liquid is sucked for the same reactor by the same liquid suction members 441. On this basis, the magnet units 422 adjacent to the station have orthographic projections on the bearing block 411 of the bearing component 410. In the arrangement direction (Y-axis direction) of the bound-free positions 412, the orthographic projections cover all of the bound-free positions 412. The magnetic force lines of the permanent magnet unit 422 can be evenly distributed on various bound-free positions 412, which can also prevent problems of uneven distribution of magnetic forces at different bound-free positions 412 and interaction of magnetic forces at adjacent bound-free positions 412, and further avoid differences between bound-free effects of the plurality of bound-free positions 412, improving the bound-free effect and analysis performance.

Referring to FIG. 6, the permanent magnet unit 422 may include a permanent magnet 422a. To provide a stronger and more stable magnetic field environment, the permanent magnet 422a may be an NdFeb magnet or an aluminum-nickel-cobalt alloy magnet. One of the magnetic poles of the permanent magnet 422a is arranged toward the bearing block 411 on the bearing component 410. For example, the N pole of the permanent magnet 422a is arranged toward the bearing block 411, or the S pole of the permanent magnet 422a is arranged toward the bearing block 411. A length of the N pole or S pole of the permanent magnet 422a in the Y-axis direction is no less than the total length occupied by the bound-free positions 412 in the Y-axis direction. To further enhance the magnetic field strength of the permanent magnet unit 422, reduce the time for the magnetic particle binder 21 to adsorb and gather on an inner wall surface of the reactor 20 in the reactor 20, prevent the magnetic particle binder 21 from being sucked away during suction of waste liquid, and improve the cleaning efficiency and bound-free effect of the bound-free device 400, referring to FIG. 5, the permanent magnet unit 422 may include two permanent magnets 422a. The two permanent magnets 422a are stacked side by side, and magnetic poles of the two permanent magnets 422a arranged toward the bearing block 411 are opposite in polarity. For example, the N pole of one permanent magnet 422a is arranged toward the bearing block 411, and the S pole of the other permanent magnet 422a is arranged toward the bearing block 411. The magnetic force near a position where the two permanent magnets 422a are stacked is maximum. Therefore, the magnetic particle binder 21 in the reactor 20 is adsorbed on an inner side wall of the reactor 20, and an adsorption position of the magnetic particle binder 21 on the inner side wall of the reactor 20 is kept at a distance from a bottom wall of the reactor 20.

The liquid suction component 440 further includes a sliding plate 442, a first beam 443, and a belt transmission unit 444. The sliding plate 442 is arranged vertically. The sliding plate 442 is in sliding fit with the bracket 450. The belt transmission unit 444 may drive the sliding plate 442 to slide up and down relative to the bracket 450. The first beam 443 is connected to the sliding plate 442. The first beam 443 is arranged transversely. Similarly, the belt transmission unit 444 includes a stepping motor 444b, a driving wheel 444c, a driven wheel 444d, and a synchronous belt 444a. The stepping motor 444b is fixed on the bracket 450. The driving wheel 444c is provided on an output shaft of the stepping motor 444b. The driven wheel 444d is rotatably provided on the bracket 450. The synchronous belt 444a is arranged, in a sleeving manner, between the driving wheel 444c and the driven wheel 444d. The bearing block 442 is fixed to the synchronous belt 444a. When the stepping motor 444b rotates, the synchronous belt 444a pulls the sliding plate 422 to slide up and down along the bracket 450.

Referring to FIG. 5, in some embodiments, both of the liquid injection member 431 and the liquid suction member 441 are provided on the first beam 443. That is, the first beam 443 can drive the liquid injection member 431 and the liquid suction member 441 to move up and down. When the bearing block 411 drives the reactor 20 to move to the first station 401, the liquid injection member 431 is located just above the reactor 20. In this case, the sliding plate 442 drives the first beam 443 to move downwards, the liquid injection member 431 extends into the reactor 20 to inject the cleaning liquid, and after the cleaning liquid has been injected, the sliding plate 442 drives the first beam 443 to move upwards to remove the liquid injection member 431 from the reactor 20. When the bearing block 411 drives the reactor 20 to move to the second station 402, the liquid suction member 441 is located just above the reactor 20. In this case, the sliding plate 442 drives the first beam 443 to move downwards, the liquid suction member 441 extends into the reactor 20 to suck the waste liquid, and after the suction of the waste liquid is completed, the sliding plate 442 drives the first beam 443 to move upwards, such that the liquid suction member 441 stretches out and away from the reactor 20.

Referring to FIG. 6, in some embodiments, only the liquid suction member 441 is provided on the first beam 443. Meanwhile, the liquid injection component 430 further includes a second beam 433, which is fixed to the bracket 450. The liquid injection member 431 is provided on the second beam 433. That is, the first beam 443 can drive only the liquid suction member 441 to move up and down. Therefore, when the bearing block 411 drives the reactor 20 to move to the first station 401, the liquid injection member 431 is located just above the reactor 20. In this case, the liquid injection member 431 cannot move up and down relative to the reactor 20, and the liquid injection member 431 directly injects the cleaning liquid to the reactor 20. When the bearing block 411 drives the reactor 20 to move to the second station 402, the liquid suction member 441 is located just above the reactor 20. In this case, the first beam 443 may move up and down to drive the liquid suction member 441 to extend into or out of the reactor 20.

The bound-free device 400 may further include a mixer configured to oscillate a reaction mixture in the reactor 20. For example, the mixer may be mounted on the bracket 450 and correspond to the first station 401. After the bearing block 411 drives the reactor 20 to move to the first station 401 and after the liquid injection member 431 injects the cleaning liquid into the reactor 20, the mixer oscillates the reactor 20 through the bearing block 411. Under the action of vibration vortex, the magnetic particle binder 21 is evenly dispersed and suspended in the reaction mixture, thus improving the bound-free effect of the magnetic particle binder 21. Alternatively, the mixer is mounted on the bearing component 410. That is, the mixer is directly integrated on the bearing block 411, so as to enable the mixer to directly oscillate the reactor 20.

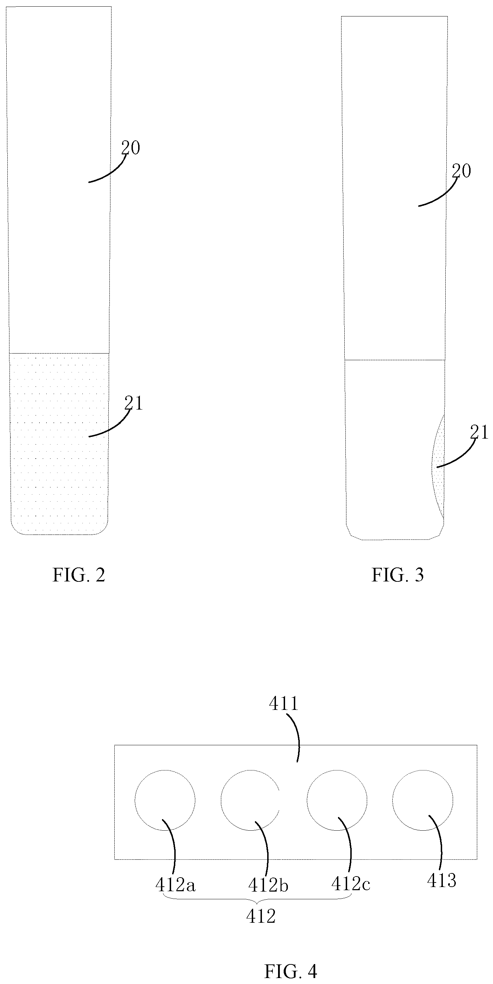

Referring to FIG. 4 to FIG. 6, when the bound-free device 400 works, description is made by taking an example where the bearing block 411 is provided with only three bound-free positions 412 arranged in a straight line on which the reactors 20 are not placed, and the three bound-free positions are denoted as a first bound-free position 412a, a second bound-free position 412b and a third bound-free position 412c, respectively. When the bearing block 411 is at the initial station 403, the transferring device adds the reactor 20 only to the first bound-free position 412a. Next, the bearing block 411 moves along the sliding rail 451 from the initial station 403 to the first station 401 and stops. In this case, the liquid injection member 431 injects the cleaning liquid to the reactor 20 in the first bound-free position 412a. In the process of injecting the cleaning liquid, the cleaning liquid has a certain impact force and flow rate, such that the cleaning liquid can well flush and wash the magnetic particle binder 21 suspended in the reactor 20. Then, the bearing block 411 moves along the sliding rail 451 from the first station 401 to the second station 402 and stops. In this case, before the suction of the waste liquid, the magnetic adsorbing component 420 adsorbs the magnetic particle binder 21 to the inner side wall of the reactor 20. While the magnetic particle binder 21 in a suspension state moves and is adsorbed to the reactor 20, the cleaning liquid also cleans the magnetic particle binder 21. After the magnetic particle binder 21 is completely adsorbed to the reactor 20, the liquid suction member 441 moves downwards to extend into the reactor 20. The liquid suction member 441 sucks the waste liquid, and the liquid suction member 441 sucking the waste liquid for the reactor 20 on the first bound-free position 412a is denoted as a first liquid suction member 441a. Because the magnetic particle binder 21 has been adsorbed, the liquid suction member 441 cannot suck the magnetic particle binder 21. Completion of first injection of cleaning liquid and first suction of waste liquid by the reactor 20 is defined as a first round of cleaning, completion of second injection of cleaning liquid and second suction of waste liquid is defined as a second round of cleaning, and so on. Therefore, when the reactor 20 moves from the first station 401 to the second station 402, the reactor 20 may complete one round of cleaning.

After the reactor 20 at the first bound-free position 412a completes one round of cleaning, the bearing block 411 continues to directly return from the second station 402 to the initial station 403. In this case, the reactor 20 at the first bound-free position 412a remains. At the same time, the transferring device adds the reactor 20 only to the second bound-free position 412b. Thus, the reactors 20 are placed on both of the first bound-free position 412a and the second bound-free position 412b on the bearing block 411. Next, the bearing block 411 drives two reactors 20 to move from the initial station 403 to the first station 401 and stop. In this case, two liquid injection members 431 inject the cleaning liquid to the two reactors 20, respectively. The cleaning liquid cleans the magnetic particle binder 21 as above, which is not described in detail. Then, the bearing block 411 moves along the sliding rail 451 from the first station 401 to the second station 402 and stops. In this case, the magnetic adsorbing component 420 adsorbs the magnetic particle binders 21 in the two reactors 20. Upon completion of the adsorption, the two liquid suction members 441 suck the waste liquid, respectively. It should be emphasized that, for the reactor 20 in the first bound-free position 412a, the liquid suction member 441 is still the first liquid suction member 441a used in the first round of cleaning. That is, the same liquid suction member 441 is used to suck waste liquid for the reactor 20 at the same bound-free position 412. For the reactor 20 in the second bound-free position 412b, the liquid suction member 441 that sucks waste liquid for it is denoted as a second liquid suction member 441b. So far, the reactor 20 in the first bound-free position 412a has completed the second round of cleaning, while the reactor 20 in the second bound-free position 412b has completed the first round of cleaning.

The bearing block 411 continues to directly return from the second station 402 to the initial station 403. In this case, the reactors 20 in the first bound-free position 412a and the second bound-free position 412b remain. At the same time, the transferring device adds the reactor 20 to only the third bound-free position 412c. Thus, the reactors 20 are placed on the first bound-free position 412a, the second bound-free position 412b, and the third bound-free position 412c on the bearing block 411. Next, the bearing block 411 drives three reactors 20 to move from the initial station 403 to the first station 401 and stop. In this case, three liquid injection members 431 inject cleaning liquid to the three reactors 20 respectively. Then, the bearing block 411 moves along the sliding rail 451 from the first station 401 to the second station 402 and stops. In this case, the first liquid suction member 441a is still used to suck waste liquid for the reactor 20 in the first bound-free position 412. At the same time, the second liquid suction member 441b is used to suck waste liquid for the reactor 20 in the second bound-free position 412. The liquid suction member 441 sucking waste liquid for the reactor 20 in the third bound-free position 412c is denoted as a third liquid suction member 441c. It is ensured that the same liquid suction member 441 is used to suck waste liquid for the reactor 20 at the same bound-free position 412. So far, the reactor 20 in the first bound-free position 412a has completed the third round of cleaning, the reactor 20 in the second bound-free position 412b has completed the second round of cleaning, and the reactor 20 in the third bound-free position 412c has just completed the first round of cleaning.

The bearing block 411 continues to directly return from the second station 402 to the initial station 403. It is assumed that the cleaning is completed when the reactor 20 completes the third round of cleaning (that is, three rounds of cleaning). In this case, the transferring device removes the reactor 20 in the first bound-free position 412a that has been completely cleaned from the first bound-free position 412a. If the bearing block 411 is provided with a dispensing position 413, the transferring device then transfers the reactor 20 from the first bound-free position 412a to the dispensing position 413. Meanwhile, the transferring device adds a new to-be-cleaned reactor 20 to the empty first bound-free position 412a. Next, the bearing block 411 moves to the first station 401, the injection member 432 injects the signal reagent to the reactor 20 located in the dispensing position 413, and at the same time, three liquid injection members 431 inject the cleaning liquid to three reactors 20. Then, the bearing block 411 directly returns to the initial station 403 after moving to the second station 402 to suck waste liquid. In this case, the reactor 20 in the first bound-free position 412a has just completed the first round of cleaning, the reactor 20 in the second bound-free position 412b has just completed the third round of cleaning, and the reactor 20 in the third bound-free position 412c has just completed the second round of cleaning. Therefore, firstly, the transferring device transfers the reactor 20 in the dispensing position 413 to which the signal reagent has been added to the measuring device 500 for signal measurement or the incubation device 300 for signal incubation. Secondly, the transferring device transfers the reactor 20 in the second bound-free position 412b that has completed three rounds of cleaning to a new empty dispensing position 413. Finally, the transferring device places a new to-be-cleaned reactor 20 in the just empty second bound-free position 412b.

Therefore, according to the above laws of movement and cleaning, the bearing block 411 drives the reactor 20 to slide back and forth between the initial station 403, the first station 401, and the second station 402, such that the reactor 20 at the initial station 403 that has reached a set number round of injection of cleaning liquid and suction of waste liquid (that is, reached a set number of rounds of cleaning) is removed from the bound-free position 412 of the bearing block 411, "a set round of injection of cleaning liquid and suction of waste liquid" is hereinafter referred to as "a set round of cleaning", and the reactor 20 not reaching the set round of cleaning continuously moves with the bearing component 410. At the same time, the new to-be-cleaned reactor 20 is moved into the bound-free position 412 of the bearing block 411. According to requirements of actual analysis performance, the number of rounds of cleaning can be flexibly determined. The set number of rounds of cleaning may be three, four, five, six or more to achieve a balance between an optimal bound-free effect and maximum cleaning efficiency.

For different rounds of cleaning of the same reactor 20, the same liquid suction member 441 is always used to suck the waste liquid. When the liquid suction member 441 completes suction of waste liquid in a previous round (the N^{th} round) of cleaning, since the liquid suction member 441 is immersed in a suspension of the reactor 20, the liquid suction member 441 carries residual liquid waste with a relatively high concentration after the liquid suction member 441 leaves the reactor 20. When the liquid suction member 441 completes suction of waste liquid in the next round (the N+1^{th} round) of cleaning, since the magnetic particle binder 21 has been subject to the N^{th} round of cleaning, the concentration of the waste liquid in the reactor 20 is relatively low, and the liquid suction member 441 carries residual liquid waste with a relatively low concentration. After the liquid suction member 441 completes suction of waste liquid in the round (the N+2^{th} round) after next of cleaning, the liquid suction member 441 carries residual liquid waste with a relatively lower concentration. Therefore, with the increase of the number of rounds of cleaning, the concentration of the residual liquid waste carried on the liquid suction member 441 may be ignored, which may not cause residual contamination to the next round of suction of waste liquid, thus improving the bound-free effect and analysis performance. For the conventional mode in which the waste liquid is sucked for a plurality of different reactors 20 through the same liquid suction members 441, the high-concentration waste liquid carried by the liquid suction member 441 in a previous reactor 20 may enter into a following reactor 20, thereby affecting the bound-free effect of the following reactor 20.

Not only three, but also four, five or even more bound-free positions 412 may be provided on the bearing block 411. Part of the reactors 20 in two adjacent bound-free positions 412 differ by one round of cleaning. That is, when the reactor 20 in the N^{th} bound-free position 412 completes the M^{th} round of cleaning, the reactor 20 in the N+1^{th} bound-free position 412 completes the M-1^{th} round of cleaning. In other words, the rector 20 first placed in the bound-free position 412 is cleaned one more round than the rector 20 next placed in the bound-free position 412. After the bearing block 411 moves between the first station 401 and the second station 402 a number of times that is greater than a set number of rounds, when the bearing block 411 directly arrives at the initial station 403 from the second station 402, one reactor 20 is definitely removed from the bound-free position 412 because it has reached the set number of rounds of cleaning, and at the same time, a new to-be-cleaned reactor 20 may be moved into the bound-free position 412. Therefore, the reactors 20 that have been cleaned may be constantly removed from the bound-free position 412 from the initial station 403, and new to-be-cleaned reactors 20 may be constantly moved into the bound-free position 412 from the initial station 403, so as to implement "metabolism" between the reactors 20 that have been cleaned and the new to-be-cleaned reactors 20, finally achieving continuous circulation cleaning of the reactors 20 by the bound-free device 400.

In some embodiments, the initial station 403 of the bound-free device 400 may be omitted. That is, the bound-free device 400 is only provided with a first station 401 and a second station 402. When the reactor 20 has been cleaned, it can be directly removed from the bound-free position 412 on the bearing block 411 from the first station 401 or the second station 402.

In some embodiments, the measuring device 500 includes a measuring chamber 510 and a photodetector 520. The measuring chamber 510 is a lightproof measuring darkroom, and the photodetector 520 is mounted on the measuring chamber 510. The measuring chamber 510 is provided with a measuring position 511. A cleaned reactor 20 to which a signal reagent is added is placed in the measuring position 511. When the signal reagent reacts with the magnetic particle binder 21 and emits light, the photodetector 520 may detect an optical signal in the reactor 20 and measure and analyze the magnetic particle binder 21 according to the optical signal.

When the immunoassay analyzer 10 is turned on, the following is an example to illustrate one of its working modes. Firstly, the supply device 100 sorts and buffers empty and clean reactors 20. Then, the transferring device transfers the reactor 20 on the supply device 100 to the incubation position 311 of the incubation device 300, the sampling device adds a sample and a target reagent on the storage device 200 to the reactor 20 in the incubation position 311, and the incubation device 300 heats and incubates the reactor 20 that has contained the sample and the target reagent for a set period of time. Next, the transferring device transfers the reactor 20 that has been incubated onto the bound-free device 400, and after cleaning the reactor 20, the bound-free device 400 can continuously add the signal reagent into the reactor 20 that has been cleaned. Finally, the transferring device transfers the cleaned reactor 20 to which the signal reagent is added to the measuring chamber 510 for measurement analysis.

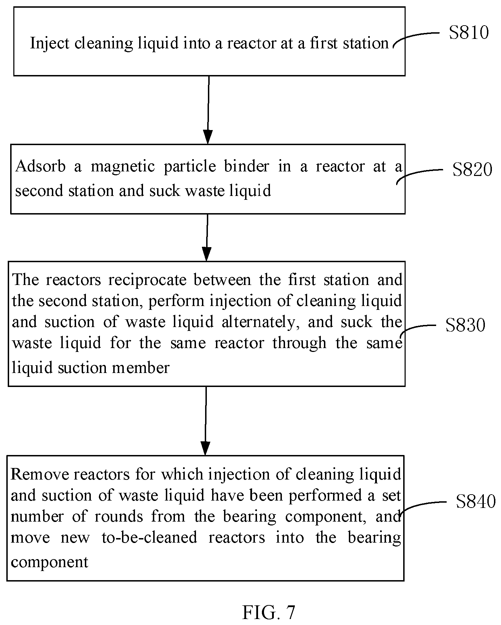

Referring to FIG. 7, the present disclosure further provides a bound-free method. The bound-free method can clean magnetic particle binders 21 in the reactors 20 through the bound-free device 400, which mainly includes the following steps:

In S810, cleaning liquid is injected into a reactor 20 at a first station 401.

In S820, a magnetic particle binder 21 in the reactor 20 at a second station 402 is adsorbed onto an inner side wall of the reactor 20, and waste liquid is sucked for the reactor 20 through a liquid suction member 441.

In S830, a bearing component 410 drives the reactors 20 to cyclically reciprocate between the first station 401 and the second station 402, such that injection of cleaning liquid and suction of waste liquid are performed alternately for the reactors 20, and the waste liquid is sucked for the same reactor 20 through the same liquid suction member 441.

In S840, the reactors 20 for which injection of cleaning liquid and suction of waste liquid have been performed a set number of rounds are removed from the bound-free positions 412 of the bearing component 410, while the reactors 20 for which injection of cleaning liquid and suction of waste liquid are not performed the set number of rounds continuously move with the bearing component 410, and new reactors 20 for which injection of cleaning liquid and suction of waste liquid are not performed are moved into the bound-free positions 412 of the bearing component 410.

When the reactor 20 is at the first station 401, the cleaning liquid may be injected into the reactor 20 through the liquid injection member 431, so as to clean the magnetic particle binder 21 with the cleaning liquid. When the reactor 20 is at the second station 402, before the waste liquid is sucked by the liquid suction member 441, the magnetic particle binder 21 is adsorbed onto the inner side wall of the reactor 20, thus avoiding a loss caused by the withdrawal of the magnetic particle binder 21 during the suction of the waste liquid, which will affect the analysis performance. After the reactors 20 reciprocate multiple times between the first station 401 and the second station 402, injection of the cleaning liquid and suction of waste liquid may be alternately performed for the reactors 20, so as to form multiple rounds of cleaning. During each round of cleaning, the waste liquid is sucked for the same reactors 20 through the same liquid suction members 441. With the increasing of the round of cleaning for the reactors 20, the concentration of residual waste liquid carried on the liquid suction members 441 gradually decreases, which prevents the liquid suction members 441 from forming residual contamination for the reactors 20.

In some embodiments, the bearing component 410 drives the reactors 20 to cyclically reciprocate sequentially between the initial station 403, the first station 401, and the second station 402. That is, the initial station 403 serves as a buffer station. When the bearing component 410 moves to the initial station 403, the reactors 20 for which the number of rounds of cleaning has been set are removed from the bound-free positions 412, and new to-be-cleaned reactors 20 are moved into the bound-free positions 412. In order to improve the cleaning efficiency, the bearing component 410 moves on the same linear trajectory between the initial station 403, the first station 401, and the second station 402. That is, the bearing component 410 linearly moves between the initial station 403, the first station 401, and the second station 402. The same reactors 20 for which three or four rounds of injection of cleaning liquid and suction of waste liquid have been performed are removed from the bearing component 410. That is, the reactors 20 after three or four rounds of cleaning have been cleaned.

In some embodiments, the magnetic particle binders 21 in the reactors 20 are adsorbed through a permanent magnet unit 422, such that magnetic lines of force of the permanent magnet unit 422 uniformly cover a plurality of bound-free positions 412 on the bearing component 410 at the second station 402, and the permanent magnet unit 422 can adsorb the magnetic particle binder 21 in each reactor 20. When the bearing component 410 is at the second station 402, a distance between the permanent magnet unit 422 and the bearing component 410 is changed to adjust an adsorption range or adsorption shape of the magnetic particle binder 21 on the reactor 20. According to a requirement of an actual situation, a reasonable distance between the permanent magnet unit 422 and the bearing component 410 can be finally formed by balancing a loss risk and a bound-free effect of the magnetic particle binder 21.

In some embodiments, when a set number of rounds of injection of cleaning liquid and suction of waste liquid have been performed for a reactor 20, the reactor 20 is transferred from the bound-free position 412 of the bearing component 410 to the dispensing position 413 of the bearing component 410, and a signal reagent is injected to the reactor 20 in the dispensing position 413 at the first station 401. This adds a use function of the bound-free device 400, making the structure of the bound-free device 400 more compact.

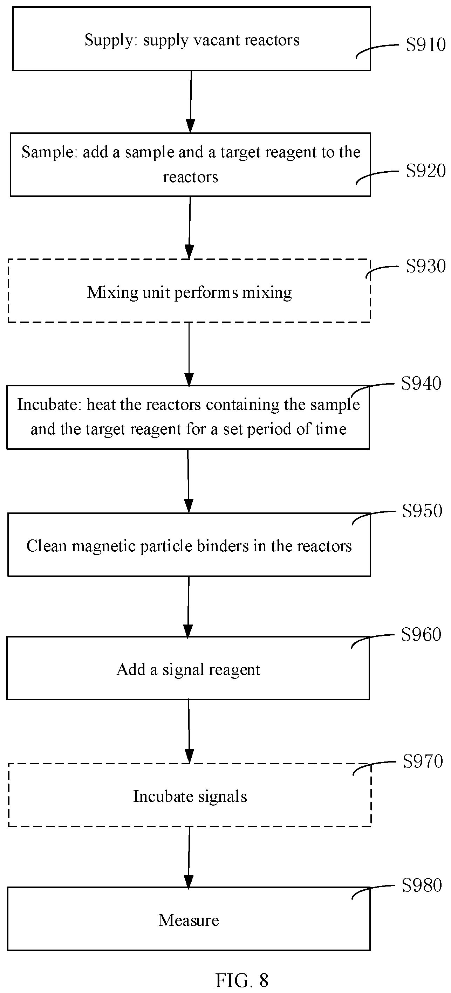

Referring to FIG. 8, the present disclosure further provides a sampling analysis method, which includes the following steps:
In S910 of supplying: a supply device 100 sorts vacant reactors 20.
In S920 of sampling: a sampling device 600 adds a sample and a target reagent to the vacant reactors 20.
In S940 of incubation: an incubation device 300 heats the reactors 20 containing the sample and the target reagent for a set period of time.
In S950 of cleaning: a bound-free device 400 cleans magnetic particle binders 21 in the reactors 20.
In S980 of measurement: a measuring device 500 measures the amount of luminescence of the reactors 20 treated by the bound-free method and with the signal reagent added.

In some embodiments, prior to the incubation step, a mixing step (S930) is performed for the reactors 20 containing the sample and the target reagent after sampling. That is, the sample and the target reagent are mixed through a mixing device 700 and then are incubated, so as to improve the incubation effect. Prior to the measurement step, the reactors are treated by a step of adding a signal reagent (S960), and the reactors 20 containing the signal reagent are heated for a set period of time, that is, a signal incubation step (S970) is performed for the reactors 20 containing the signal reagent and the magnetic particle binder 21. During signal incubation, the incubation device 300 heats the reactors 20, so as to improve the analysis performance. In the sampling step, the sample and the target reagent are sucked simultaneously through a sampling steel needle, which can simplify the structure of the bound-free device 400 and reduce costs.

In the incubation step, the incubation time is approximately about 5 to 60 minutes. In some embodiments, the incubation step may further include following sub-steps:
First incubation: the reactors 20 containing the sample and a first-type target reagent are heated for a set period of time.
Second incubation: a second-type target reagent is added to the reactors 20 after first incubation and then the reactors 20 are heated for a set period of time.

When the incubation step includes two sub-steps of first incubation and second incubation, that is, after the supplying step and the sampling step and prior to the cleaning step, the two target reagents are added to the reactors 20 in twice. Each time a target reagent is added, the reactors 20 are heated for incubation by the incubation device 300.

In some embodiments, the sample analysis method further includes the following steps:
The reactors 20 after the first incubation are treated with the steps in the first bound-free method.

Second incubation is performed for the reactors 20 treated with the steps in the first bound-free method.

The reactors 20 after the second incubation are treated with the steps in the second bound-free method.

Specifically, after the reactors 20 undergo the supply step and the sampling step, firstly, the incubation device 300 performs the first incubation on the reactors 20, next, the first cleaning is performed on the reactors 20 after the first incubation through the bound-free device 400, a second-type target reagent is added after the first cleaning, then the reactors 20 after the first cleaning and with the second-type target reagent added are transferred to the incubation device 300 for the second incubation, then the second cleaning is performed on the reactors 20 after the second incubation through the bound-free device 400, and finally a signal reagent is added to the reactors 20 after the second cleaning and the reactors are sent to the measuring device 500 for measurement.

The above embodiments express only several implementations of the present disclosure, and the descriptions thereof are relatively specific and detailed, but they cannot be interpreted as limitations on the scope of the invention patent. It should be pointed out that, for those of ordinary skill in the art, a number of transformations and improvements can be made without departing from the scope of the invention as defined in the appended claims.

## Claims

1. An immunoassay analyzer (10), comprising:
a sampling device (600) comprising a sampling member configured to add a sample and a target reagent to a reactor (20);
an incubation device (300) configured to incubate a plurality of reactors (20) containing the sample and the target reagent;
a bound-free device (400) having a first station (401) and a second station (402), and comprising a plurality of liquid suction members (441), and a liquid injection member (431), when the plurality of reactors (20) reciprocates several times between the first station (401) and the second station (402), waste liquid in the same reactor (20) is sucked by the same liquid suction member (441); cleaning liquid is injected by the liquid injection member (431) into the reactor (20) at the first station (401), the liquid suction member (441) is configured to suck waste liquid from the reactor (20) at the second station (402), the bound-free device (400) further comprises a bearing component (410) and at least one permanent magnet unit (422), the bearing component (410) is configured to slide between the first station (401) and the second station (402) and to drive the reactors (20) to move between the first station (401) and the second station (402), the bearing component (410) is provided with a plurality of bound-free positions (412) configured to place the plurality of reactors (20), the liquid suction members (441) are in one-to-one correspondence with the bound-free positions (412), when the bearing component (410) is at the second station (402), all of the permanent magnet units (422) have orthographic projections on the bearing component (410), the orthographic projections of all of the permanent magnet units (422) cover all of the bound-free positions (412), the permanent magnet units (422) are configured to adsorb a magnetic particle binder (21) in the reactor (20) at the second station (402), the bearing component (410) is provided with a dispensing position (413), when the bearing component (410) is at the first station (401), a signal reagent is injected to the reactor (20) located in the dispensing position (413);
a measuring device (500) configured to perform signal measurement to the reactor (20) containing the signal reagent; and
a transferring device configured to transfer the reactor (20) between the incubation device (300), the bound-free device (400), and the measuring device (500).

2. The immunoassay analyzer (10) according to claim 1, wherein the bound-free device (400) further has an initial station (403), and the reactor (20) is capable of reciprocating between the initial station (403), the first station (401), and the second station (402); and at the initial station (403), the reactor (20) is capable of being moved into or out of the bound-free device (400).

3. The immunoassay analyzer (10) according to claim 1, wherein the bound-free device (400) further comprises a liquid injection member (431), when at least one reactor reciprocates several times between the first station (401) and the second station (402), cleaning liquid is injected into the same reactor (20) by the same liquid injection member (431).

4. The immunoassay analyzer (10) according to claim 1, wherein in a direction perpendicular to the sliding direction of the bearing component (410, the orthographic projections of the at least one permanent magnet unit (422) on the bearing component (410) cover at least two bound-free positions (412).

5. The immunoassay analyzer (10) according to claim 1, wherein the incubation device (300) has an incubation position (311) configured to accommodating the reactor (20), the incubation position (311) further comprise at least one of the following:
the incubation positions (311) are arranged in a matrix; and
the number of the incubation positions (311) is 5 to 100.

6. The immunoassay analyzer (10) according to claim 1, further comprising a storage device (200) configured to store the sample and the target reagent simultaneously.

7. The immunoassay analyzer (10) according to claim 6, wherein the storage device (200) is provided with a sampling position configured for the sampling device (600) to suck the sample and the target reagent, the incubation device (300) is provided with an incubation position (311), and a motion trajectory of the sampling member passes through the sampling position and part of the incubation position (311), the sampling positions are distributed on a straight line of the storage device (200), part of the incubation positions (311) on the incubation block are on the straight line, the straight line coincides with the motion trajectory of the sampling member.

8. The immunoassay analyzer (10) according to claim 1, wherein the measuring device (500) comprises a measuring chamber (510) and a photodetector (520), the measuring chamber (510) is provided with a measuring position configured to place the reactor (20), and the photodetector (520) is mounted on the measuring chamber (510) and is configured to detect an optical signal in the reactor (20).

9. The immunoassay analyzer (10) according to claim 1, further comprising a supply device (100) configured to sort the reactor (20) to provide an empty reactor, the supply device (100) comprising a feed sorting mechanism, a supply slideway, and a supply disk, the supply slideway being connected to the feed sorting mechanism and the supply disk, the feed sorting mechanism being located above the storage device (200), and the feed sorting mechanism being capable of transferring the orderly arranged reactors to the supply disk through the supply slideway.

## Patentansprüche

1. Immunoassayanalysator (10), umfassend:
eine Probenahmevorrichtung (600), umfassend ein Probenahmeelement, das konfiguriert ist, um eine Probe und ein Zielreagenz zu einem Reaktor (20) hinzuzufügen;
eine Inkubationsvorrichtung (300), die konfiguriert ist, um eine Vielzahl von Reaktoren (20) zu inkubieren, die die Probe und das Zielreagenz enthalten;
eine gebunden-freie Vorrichtung (400) mit einer ersten Station (401) und einer zweiten Station (402) und umfassend eine Vielzahl von Flüssigkeitsansaugelementen (441) und ein Flüssigkeitsinjektionselement (431), wobei, wenn die Vielzahl von Reaktoren (20) mehrere Male zwischen der ersten Station (401) und der zweiten Station (402) hin- und herbewegt werden, Abfallflüssigkeit in dem Reaktor (20) von dem Flüssigkeitsansaugelement (441) angesaugt wird; Reinigungsflüssigkeit wird durch das Flüssigkeitsinjektionselement (431) in den Reaktor (20) an der ersten Station (401) injiziert, das Flüssigkeitsansaugelement (441) ist konfiguriert, um Abfallflüssigkeit aus dem Reaktor (20) an der zweiten Station (402) anzusaugen, die gebunden-freie Vorrichtung (400) umfasst ferner eine Lagerkomponente (410) und mindestens eine Dauermagnet-Einheit (422), die Lagerkomponente (410) ist konfiguriert, um zwischen der ersten Station (401) und der zweiten Station (402) zu gleiten und die Reaktoren (20) anzutreiben, sich zwischen der ersten Station (401) und der zweiten Station (402) zu bewegen, die Lagerkomponente (410) ist versehen mit einer Vielzahl von gebunden-freien Positionen (412), die konfiguriert sind, um die Vielzahl von Reaktoren (20) zu platzieren, die Flüssigkeitsansaugelemente (441) stehen in Eins-zu-eins-Entsprechung mit den gebunden-freien Positionen (412), wenn die Lagerkomponente (410) sich an der zweiten Station (402) befindet, haben alle Dauermagnet-Einheiten (422) orthographische Projektionen auf der Lagerkomponente (410), die orthographischen Projektionen aller Dauermagnet-Einheiten (422) bedecken alle gebunden-freien Positionen (412), die Dauermagnet-Einheiten (422) sind konfiguriert, um einen magnetischen Partikelbinder (21) in dem Reaktor (20) an der zweiten Station (402) zu adsorbieren, die Lagerkomponente (410) ist versehen mit einer Dosierposition (413), wenn die Lagerkomponente (410) an der ersten Station (401) ist, wird ein Signalreagenz in den Reaktor (20) injiziert, der sich in der Dosierposition (413) befindet;
eine Messvorrichtung (500), die konfiguriert ist, um eine Signalmessung an dem Reaktor (20), der das Signalreagenz enthält, durchzuführen; und
eine Transfervorrichtung, die konfiguriert ist, um den Reaktor (20) zwischen der Inkubationsvorrichtung (300), der gebunden-freien Vorrichtung (400) und der Messvorrichtung (500) zu transferieren.

2. Immunoassayanalysator (10) nach Anspruch 1, wobei die gebunden-freie Vorrichtung (400) ferner eine Anfangsstation (403) aufweist, und der Reaktor (20) zwischen der Anfangsstation (403), der ersten Station (401) und der zweiten Station (402) hin- und herbewegbar ist; und an der Anfangsstation (403) der Reaktor (20) in die gebunden-freie Vorrichtung (400) hinein oder aus dieser heraus bewegt werden kann.

3. Immunoassayanalysator (10) nach Anspruch 1, wobei die gebunden-freie Vorrichtung (400) ferner ein Flüssigkeitsinjektionselement (431) umfasst, wobei, wenn mindestens ein Reaktor mehrere Male zwischen der ersten Station (401) und der zweiten Station (402) hin- und herbewegt wird, Reinigungsflüssigkeit in den Reaktor (20) durch das Flüssigkeitsinjektionselement (431) injiziert wird.

4. Immunoassayanalysator (10) nach Anspruch 1, wobei in einer Richtung senkrecht zur Gleitrichtung der Lagerkomponente (410) die orthographischen Projektionen der mindestens einen Dauermagnet-Einheit (422) auf der Lagerkomponente (410) mindestens zwei gebunden-freie Positionen (412) abdecken.

5. Immunoassayanalysator (10) nach Anspruch 1, wobei die Inkubationsvorrichtung (300) eine Inkubationsposition (311) aufweist, die zur Aufnahme des Reaktors (20) konfiguriert ist, wobei die Inkubationsposition (311) ferner mindestens eines umfasst von:
die Inkubationspositionen (311) sind in einer Matrix angeordnet; und
die Anzahl der Inkubationspositionen (311) beträgt 5 bis 100.

6. Immunoassayanalysator (10) nach Anspruch 1, ferner umfassend eine Speichervorrichtung (200), die konfiguriert ist, um die Probe und das Zielreagenz gleichzeitig zu speichern.

7. Immunoassayanalysator (10) nach Anspruch 6, wobei die Speichervorrichtung (200) mit einer Probenentnahmeposition versehen ist, die so konfiguriert ist, dass die Probenentnahmevorrichtung (600) die Probe und das Zielreagenz ansaugt, die Inkubationsvorrichtung (300) mit einer Inkubationsposition (311) versehen ist, und eine Bewegungsbahn des Probenentnahmeelements durch die Probenentnahmeposition und einen Teil der Inkubationsposition (311) verläuft, die Probenentnahmepositionen auf einer geraden Linie der Speichervorrichtung (200) verteilt sind, ein Teil der Inkubationspositionen (311) auf dem Inkubationsblock auf der geraden Linie liegt, die gerade Linie mit der Bewegungsbahn des Probenentnahmeelements zusammenfällt.

8. Immunoassayanalysator (10) nach Anspruch 1, wobei die Messvorrichtung (500) eine Messkammer (510) und einen Photodetektor (520) umfasst, die Messkammer (510) mit einer Messposition versehen ist, die konfiguriert ist, um den Reaktor (20) zu platzieren, und der Photodetektor (520) an der Messkammer (510) montiert ist und konfiguriert ist, um ein optisches Signal in dem Reaktor (20) zu detektieren.

9. Immunoassayanalysator (10) nach Anspruch 1, ferner umfassend eine Zufuhrvorrichtung (100), die konfiguriert ist, um den Reaktor (20) zu sortieren, um einen leeren Reaktor bereitzustellen, wobei die Zufuhrvorrichtung (100) einen Zuführsortierungsmechanismus, eine Zufuhrführungsbahn und eine Zuführscheibe umfasst, wobei die Zufuhrführungsbahn mit dem Zuführsortierungsmechanismus und der Zuführscheibe verbunden ist, wobei sich der Zuführsortierungsmechanismus oberhalb der Speichereinrichtung (200) befindet, und wobei der Zuführsortierungsmechanismus in der Lage ist, die ordnungsgemäß angeordneten Reaktoren durch die Zufuhrführungsbahn zu der Zuführscheibe zu übertragen.

## Revendications

1. Analyseur de dosage immunologique (10), comprenant :
un dispositif d'échantillonnage (600) comprenant un élément d'échantillonnage conçu pour ajouter un échantillon et un réactif cible à un réacteur (20) ;
un dispositif d'incubation (300) conçu pour incuber une pluralité de réacteurs (20) contenant l'échantillon et le réactif cible ;
un dispositif de liaison/non-liaison (400) ayant une première station (401) et une seconde station (402), et comprenant une pluralité d'éléments d'aspiration de liquide (441), et un élément d'injection de liquide (431), lorsque la pluralité de réacteurs (20) va et vient plusieurs fois entre la première station (401) et la seconde station (402), du liquide résiduel dans le même réacteur (20) est aspiré par le même élément d'aspiration de liquide (441) ; du liquide de nettoyage est injecté par l'élément d'injection de liquide (431) dans le réacteur (20) au niveau de la première station (401), l'élément d'aspiration de liquide (441) est conçu pour aspirer du liquide résiduel du réacteur (20) au niveau de la seconde station (402), le dispositif de liaison/non-liaison (400) comprend en outre un composant de support (410) et au moins une unité d'aimant permanent (422), le composant de support (410) est conçu pour coulisser entre la première station (401) et la seconde station (402) et pour entraîner un déplacement des réacteurs (20) entre la première station (401) et la seconde station (402), le composant de support (410) est pourvu d'une pluralité de positions de liaison/non-liaison (412) conçues pour placer la pluralité de réacteurs (20), les éléments d'aspiration de liquide (441) sont dans une correspondance univoque avec les positions de liaison/non-liaison (412), lorsque le composant de support (410) est au niveau de la seconde station (402), la totalité des unités d'aimant permanent (422) ont des projections orthographiques sur le composant de support (410), les projections orthographiques de la totalité des unités d'aimant permanent (422) couvrent la totalité des positions de liaison/non-liaison (412), les unités d'aimant permanent (422) sont conçues pour adsorber un liant de particule magnétique (21) dans le réacteur (20) au niveau de la seconde station (402), le composant de support (410) est pourvu d'une position de distribution (413), lorsque le composant de support (410) est au niveau de la première station (401), un réactif de signal est injecté dans le réacteur (20) localisé dans la position de distribution (413) ;
un dispositif de mesure (500) configuré pour mettre en œuvre une mesure de signal sur le réacteur (20) contenant le réactif de signal ; et
un dispositif de transfert conçu pour transférer le réacteur (20) entre le dispositif d'incubation (300), le dispositif de liaison/non-liaison (400), et le dispositif de mesure (500).

2. Analyseur de dosage immunologique (10) selon la revendication 1, dans lequel le dispositif de liaison/non-liaison (400) a en outre une station initiale (403), et le réacteur (20) est capable d'aller et venir entre la station initiale (403), la première station (401) et la seconde station (402) ; et au niveau de la station initiale (403), le réacteur (20) est capable d'être déplacé vers l'intérieur ou l'extérieur du dispositif de liaison/non-liaison (400).

3. Analyseur de dosage immunologique (10) selon la revendication 1, dans lequel le dispositif de liaison/non-liaison (400) comprend en outre un élément d'injection de liquide (431), lorsqu'au moins un réacteur va et vient plusieurs fois entre la première station (401) et la seconde station (402), du liquide de nettoyage est injecté dans le même réacteur (20) par le même élément d'injection de liquide (431).

4. Analyseur de dosage immunologique (10) selon la revendication 1, dans lequel dans une direction perpendiculaire à la direction de coulissement du composant de support (410, les projections orthographiques de l'au moins une unité d'aimant permanent (422) sur le composant de support (410) couvrent au moins deux positions de liaison/non-liaison (412).

5. Analyseur de dosage immunologique (10) selon la revendication 1, dans lequel le dispositif d'incubation (300) a une position d'incubation (311) conçue pour recevoir le réacteur (20), les positions d'incubation (311) comprennent en outre au moins l'un de ce qui suit :
les positions d'incubation (311) sont agencées dans une matrice ; et
le nombre des positions d'incubation (311) va de 5 à 100.

6. Analyseur de dosage immunologique (10) selon la revendication 1, comprenant en outre un dispositif de stockage (200) conçu pour stocker l'échantillon et le réactif cible simultanément.

7. Analyseur de dosage immunologique (10) selon la revendication 6, dans lequel le dispositif de stockage (200) est pourvu d'une position d'échantillonnage conçue pour permettre au dispositif d'échantillonnage (600) d'aspirer l'échantillon et le réactif cible, le dispositif d'incubation (300) est pourvu d'une position d'incubation (311), et une trajectoire de mouvement de l'élément d'échantillonnage passe à travers la position d'échantillonnage et une partie de la position d'incubation (311), les positions d'échantillonnage sont réparties sur une ligne droite du dispositif de stockage (200), une partie des positions d'incubation (311) sur le bloc d'incubation sont sur la ligne droite, la ligne droite coïncide avec la trajectoire de mouvement de l'élément d'échantillonnage.

8. Analyseur de dosage immunologique (10) selon la revendication 1, dans lequel le dispositif de mesure (500) comprend une chambre de mesure (510) et un photodétecteur (520), la chambre de mesure (510) est pourvue d'une position de mesure conçue pour placer le réacteur (20), et le photodétecteur (520) est monté sur la chambre de mesure (510) et est configuré pour détecter un signal optique dans le réacteur (20).

9. Analyseur de dosage immunologique (10) selon la revendication 1, comprenant en outre un dispositif d'approvisionnement (100) configuré pour trier le réacteur (20) pour fournir un réacteur vide, le dispositif d'approvisionnement (100) comprenant un mécanisme de tri d'alimentation, une glissière d'approvisionnement et un disque d'approvisionnement, la glissière d'approvisionnement étant reliée au mécanisme de tri d'alimentation et au disque d'approvisionnement, le mécanisme de tri d'alimentation étant localisé au-dessus du dispositif de stockage (200), et le mécanisme de tri d'alimentation étant capable de transférer les réacteurs agencés de manière ordonnée au disque d'approvisionnement par l'intermédiaire de la glissière d'approvisionnement.
